# EUROPÄISCHE PATENTANMELDUNG

(11) **EP 4 610 864 A1**
(43) Veröffentlichungstag der Anmeldung: **03.09.2025**
(21) Anmeldenummer: 24160299.4
(22) Anmeldetag: 28.02.2024
(51) Int. Cl.: G06F 21/62, H04L 9/40

(54) **SYSTEM ZUM VERWALTEN VON ZUGRIFFSBERECHTIGUNGEN AUF EXPONIERTE DIENSTE**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein System (S) zum Verwalten von Zugriffsberechtigungen auf exponierte Dienste (ED). Das System (S) weist eine Verwaltungseinheit (VE) zum Verwalten von Zugriffsberechtigungen, zumindest einen exponierten Dienst (ED) und eine Zugriffsberechtigungsermittlungseinheit (ZBE) auf, wobei die Verwaltungseinheit (VE) dazu ausgebildet ist, eine Anfrage zum Starten einer Gesamtapplikation (GA), die aus zumindest einer Komponente (CI) besteht, zu erhalten, wobei die Gesamtapplikation (GA) eine zum Starten erforderliche Beschreibungsdatei aufweist, die zumindest eine Referenz auf den zumindest einen exponierten Dienst (ED) umfasst, und wobei die Verwaltungseinheit (VE) des Weiteren dazu ausgebildet ist, von der Zugriffsberechtigungsermittlungseinheit (ZBE) eine Zugriffsberechtigung auf den zumindest einen exponierten Dienst (ED) für die Gesamtapplikation (GA) anzufordern, von der Zugriffsberechtigungsermittlungseinheit (ZBE) eine anwendungs- und/oder umgebungsspezifische Zugriffsberechtigung zu erhalten, und die Gesamtapplikation (GA) unter Verwendung der erhaltenen Zugriffsberechtigung zu starten.

Durch dieses System ist es möglich, dynamisch, basierend auf den aktuellen anwendungs- und umgebungsspezifischen Bedingungen, und zentral Gesamtapplikationen Zugriffsberechtigungen zu erteilen.

## Beschreibung

Die vorliegende Erfindung betrifft ein System zum Verwalten von Zugriffsberechtigungen auf exponierte Dienste. Darüber hinaus betrifft die vorliegende Erfindung ein Verfahren zum Verwalten von Zugriffsberechtigungen auf exponierte Dienste. Des Weiteren betrifft die vorliegende Erfindung ein Computerprogrammprodukt, welches auf einer programmgesteuerten Einrichtung die Durchführung des Verfahrens zum Verwalten von Zugriffsberechtigungen auf exponierte Dienste veranlasst.

Im Bereich der Containervisualisierung können Container-Instanzen bei zentral gemanagten Umgebungen so genannte Dienstzugänge oder Service-Accounts zugewiesen bekommen, mit dessen Hilfe sich die in dem jeweiligen Container betriebenen Instanzen an einer über ein Netzwerk exponierten Programmier- oder Anwenderschnittstelle (API), im Folgenden allgemein als exponierter Dienst bezeichnet, anmelden können. Bei der Verwendung eines solchen Service-Accounts wird der Container-Instanz vom Orchestrator bzw. der Verwaltungseinheit ein Zugangstoken ausgestellt. Das Zugangstoken kann dann von der Container-Instanz zur Anmeldung an dem exponierten Dienst verwendet werden.

Soll einer Container-Instanz eine Zugriffsberechtigung auf einen zentral vom Orchestrator verwalteten Dienst zugewiesen werden, können sich anfragende Container-Instanzen bei diesem Dienst mit Hilfe der oben genannten Service-Accounts (siehe beispielsweise https://kubernetes.io/docs/tasks/configure-pod-container/configure-service-account/) authentisieren. Im Fall eines Kubernetes API-Servers wird die Zuweisung der Zugriffsberechtigungen oder Zugangstokens mit Hilfe des Kubernetes Role-Based-Access-Control-Systems (https://kubernetes.io/docs/reference/access-authn-authz/rbac/) implementiert. Hierbei wird dann für jeden Service-Account eine entsprechende Berechtigung durch den Orchestrator durchgeführt. Beim Starten einer Anwendung oder Applikation muss jedoch die Zuweisung der einzelnen, in der Anwendung enthaltenen Container-Instanzen zu einem Service-Account händisch durch Anpassung der Deployment-Konfiguration, im Folgenden auch Beschreibungsdatei oder Startbeschreibungsinformation genannt, vorgenommen werden und der Betreiber der verwalteten Infrastruktur muss zusätzliche Berechtigungen für die jeweiligen Service-Accounts mit Hilfe entsprechender RBAC-Konfigurationen (role based access control) erzeugen und aktivieren.

Es sollte beachtet werden, dass unabhängig vom grammatikalischen Geschlecht eines bestimmten Begriffes Personen mit männlicher, weiblicher oder anderer Geschlechteridentität mit umfasst sind.

Es existieren im industriellen Umfeld containerbasierte Edge Computing Ökosysteme, bei denen mit Hilfe von Docker-Compose-Dateien und den darin referenzierten Container-Images komplette, eigenständige Applikationen analog einer SmartPhone App definiert werden. Solche Applikationen können auf einer kundenspezifischen Laufzeitumgebung installiert werden und auf dieser bereits bestehende Dienste referenzieren. Diese können entweder von der Ausführungsumgebung zentral bereitgestellt werden oder durch andere Apps bereitgestellt werden. Greifen nun Applikationen unterschiedlicher Hersteller auf einen gemeinsamen, von einem zentralen Verwaltungssystem bzw. Orchestrator verwalteten exponierten Dienst oder API-Service zu, entsteht nun das Problem, dass der Bereitsteller der App für sich selbst eigenständig beliebige Zugriffsprivilegien für den Zugriff auf den exponierten Dienst zuweisen kann.

Gesamtapplikationen oder Gesamtanwendungen, die aus mehreren Komponenten, den sogenannten Container-Instanzen bestehen können (ggf. inklusive des Service-Accounts und der Zugriffsberechtigungen des exponierten oder entfernten Dienstes) mit Hilfe so genannter Helm Charts (siehe https://helm.sh) eingespielt werden kann. Sämtliche Ressourcen, die für den Betrieb der Komponenten erforderlich sind, werden dabei als Applikations- oder Anwendungsbündel, im Folgenden Gesamtapplikation genannt, verteilt bzw. deployt. Das Helm Chart wird in diesem Fall üblicherweise vom Bereitsteller der Applikation zur Verfügung gestellt und lediglich vom Betreiber mit Hilfe entsprechender Übergabeparameter parametriert. Es erfolgen hierbei durch den Betreiber keinerlei granulare Anpassungen der Berechtigungen oder eine abgestufte Überprüfung der Vertrauenswürdigkeit einer Applikation und eine hierdurch resultierende abgestufte Zuweisung von Zugriffsberechtigungen auf einen bestimmten Service oder Dienst.

Anforderungen an Deployment-Konfigurationen können bei Lösungen wie Kubernetes beispielsweise mit Hilfe von eigenen Admission Controllern (siehe beispielsweise https://kubernetes.io/docs/reference/access-authn-authz/admission-controllers/) überprüft und validiert werden. Eine bekannte Variante ist OPA-Gatekeeper (https://github.com/open-policyagent/gatekeeper-library). Hierbei kann der Betreiber einer Plattform Anforderungen an Einstellungen innerhalb der Deployment-Konfiguration definieren, die vom Anwender oder Bereitsteller der Applikation, welcher die Deployment-Konfiguration einspielt, erfüllt werden müssen.

Bei Edge Computing Ökosystemen kann die Lösung eines OpenPolicyAgent (siehe https://www.openpolicyagent.org) eingesetzt werden. Hiermit bekommt der Anwender, welcher über das Industrial Edge Management eine Industrial Edge App einspielt, mitgeteilt welche Überprüfungen ausgeführt wurden und welches Ergebnis diese liefern. Der Status einer einzelnen Überprüfung kann hierbei Allow, Warn oder Block annehmen. Allerdings wird mit Hilfe des OpenPolicyAgent nur überprüft bzw. überwacht, ob die Deployment-Konfigurationen vordefinierten Kriterien entsprechen. Es erfolgt jedoch keine hiervon abgeleitete Einrichtung von Benutzerberechtigungen.

Vor diesem Hintergrund besteht eine Aufgabe der vorliegenden Erfindung darin, eine Möglichkeit bereitzustellen, automatisch Gesamtapplikationen Zugriffsberechtigungen auf exponierte Dienste bereitzustellen, wobei die Zugriffsberechtigungen an die jeweiligen aktuellen Bedingungen und Vorgaben angepasst sind.

Demgemäß wird ein System zum Verwalten von Zugriffsberechtigungen auf exponierte Dienste vorgeschlagen.

Das System weist eine Verwaltungseinheit, den sogenannten Orchestrator, zum Verwalten von Zugriffsberechtigungen, zumindest einen exponierten Dienst und eine Zugriffsberechtigungsermittlungseinheit auf. Die Verwaltungseinheit ist dazu ausgebildet, eine Anfrage zum Starten einer Gesamtapplikation zu erhalten. Die Gesamtapplikation, auch Applikationsbündel genannt, besteht aus zumindest einer Komponente, d.h. zumindest einer Applikation, die als Container ausgebildet sein kann, bzw. Container-Instanzen. Die Gesamtapplikation weist eine zum Starten erforderliche Beschreibungsdatei, die sogenannte Deployment-Konfiguration oder Startbeschreibungsinformation, auf, die zumindest eine Referenz auf den zumindest einen exponierten Dienst umfasst. Bei dem exponierten Dienst kann es sich beispielsweise um einen API-Server oder den exponierten Dienst einer beliebigen anderen App handeln. Die Beschreibungsdatei kann dabei eine oder mehrere Referenzen aufweisen, wobei eine Referenz auf mehrere exponierte Dienste verweisen kann oder mehrere Referenzen auf denselben exponierten Dienst verweisen können.

Die Verwaltungseinheit ist des Weiteren dazu ausgebildet, von der Zugriffsberechtigungsermittlungseinheit eine Zugriffsberechtigung, auch Zugangstoken genannt, auf den zumindest einen exponierten Dienst für die Gesamtapplikation anzufordern, von der Zugriffsberechtigungsermittlungseinheit eine anwendungs- und/oder umgebungsspezifische Zugriffsberechtigung zu erhalten, und die Gesamtapplikation unter Verwendung der erhaltenen Zugriffsberechtigung zu starten.

Die jeweilige Einheit, zum Beispiel Zugriffsberechtigungsermittlungseinheit oder Verwaltungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server, einem Hostsystem oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Durch das vorgeschlagene System ist es also möglich, durch eine zentrale Verwaltungseinheit während des Installationsprozesses einer containerisierten Applikation, der Gesamtapplikation, die Beschreibungsdatei der Gesamtapplikation zu überprüfen und basierend darauf der Gesamtapplikation eine Zugriffsberechtigung auf den zumindest einen referenzierten exponierten Dienst zuzuweisen. Die Zugriffsberechtigung wird dabei dynamisch, basierend auf der jeweiligen Gesamtapplikation und der orchestrierten Umgebung, erstellt. Das bedeutet, dass die Zugriffsberechtigung an die jeweilige aktuelle Gesamtapplikation angepasst ist. Des Weiteren wird die Zugriffsberechtigung zentral durch die Verwaltungseinheit und die Zugriffsberechtigungsermittlungseinheit erstellt, so dass verhindert werden kann, dass sich der Bereitsteller oder Anwender der Gesamtapplikation Zugriffsrechte auf den exponierten Dienst selbst zuweisen kann.

Gemäß einer Ausführungsform ist die Zugriffsberechtigungsermittlungseinheit dazu ausgebildet, aus einer Datenbank Zugriffsberechtigungen abzurufen, die Richtlinien entsprechen, die für den zumindest einen exponierten Dienst vordefiniert sind, wobei die Richtlinien in der Datenbank gespeichert sind. Bei der Datenbank kann es sich um eine beliebige Datenbank handeln, die getrennt von der Verwaltungseinheit und der Zugriffsberechtigungsermittlungseinheit vorgesehen ist. Alternativ kann die Datenbank auch in der Zugriffsberechtigungsermittlungseinheit integriert sein.

Für den exponierten Dienst können Richtlinien vordefiniert sein, die festlegen, welche Zugriffsberechtigungen für den exponierten Dienst vorgesehen sind. Auf diese Weise kann vorab definiert werden, welche Zugriffsberechtigungen für welchen exponierten Dienst überhaupt vorhanden sind und unter welchen Umständen, d.h. applikations- und umgebungsspezifisch, diese Zugriffsberechtigungen erteilt werden. Hierbei sollte beachtet werden, dass eine Zugriffsberechtigung allgemein einen Zugriff auf den zumindest einen exponierten Dienst erlaubt, diese Zugriffsberechtigung aber hinsichtlich ihres Umfangs basierend auf den Richtlinien angepasst werden kann. Beim Erteilen der Zugriffsberechtigung kann also ein Vergleich der Gesamtapplikation bzw. deren Beschreibungsdatei und der orchestrierten Umgebung mit den vordefinierten Richtlinien erfolgen. Auf diese Weise wird eine dynamische, an die konkrete Gesamtapplikation und die Umgebung angepasste Zugriffsberechtigung erteilt.

Gemäß einer weiteren Ausführungsform ist die Zugriffsberechtigungsermittlungseinheit dazu ausgebildet, bei einer Aktualisierung der vordefinierten Richtlinien die Zugriffsberechtigung für die Gesamtapplikation zu aktualisieren. Werden die Richtlinien aktualisiert, kann dies der Verwaltungseinheit übermittelt werden, die daraufhin eine aktualisierte Zugriffsberechtigung an die Gesamtapplikation übermitteln kann. Auf diese Weise kann sichergestellt werden, dass die der Gesamtapplikation erteilte Zugriffsberechtigung jederzeit den derzeit gültigen Richtlinien entspricht.

Gemäß einer weiteren Ausführungsform weist die Zugriffsberechtigung ein oder mehrere Zugriffsprivilegien auf. Bei den Zugriffsprivilegien kann es sich um einzelne Zugriffsrechte handeln. Eine Zugriffsberechtigung kann somit aus mehreren einzelnen Zugriffsrechten bestehen, wodurch eine detaillierte Ausgestaltung der Zugriffsberechtigung möglich ist. Das heißt, dass eine Zugriffsberechtigung durch Anpassung mehrerer einzelner Zugriffsrechte sehr genau spezifizierte Zugriffe auf verschiedene Teil-Komponenten des exponierten Dienstes erlauben kann.

Gemäß einer weiteren Ausführungsform ist die Verwaltungseinheit dazu ausgebildet, basierend auf der erhaltenen Zugriffsberechtigung einen Dienstzugang auf den zumindest einen exponierten Dienst für die Gesamtapplikation zu erstellen und der Gesamtapplikation den Dienstzugang zuzuordnen. Wurde also die Zugriffsberechtigung, evtl. mit entsprechenden Zugriffsrechten, für die Gesamtapplikation von der Zugriffsberechtigungsermittlungseinheit ermittelt, kann diese durch einen entsprechenden API-Aufruf durch die Verwaltungseinheit als Dienstzugang eingerichtet werden. Hierdurch erhält der exponierte Service die entsprechenden Informationen zur Autorisierung, d.h. Freigabe bzw. Beantwortung, der Anfragen von der Gesamtapplikation. Anschließend wird der Gesamtapplikation der ermittelte Dienstzugang zugeordnet und durch einen entsprechenden API-Aufruf an der Verwaltungseinheit gestartet. Die Verwendung eines solchen Dienstzugangs hat den Vorteil, dass dieser einmal erstellt und bei Bedarf von der Gesamtapplikation, oder anderen Gesamtapplikationen, wiederverwendet werden kann.

Dementsprechend ist gemäß einer weiteren Ausführungsform die Verwaltungseinheit dazu ausgebildet, den erstellten Dienstzugang weiteren Gesamtapplikationen mit derselben Zugriffsberechtigung zuzuordnen. Auf diese Weise können benötigte Ressourcen des Systems, wie Speicher- und Rechenkapazitäten, reduziert werden. Des Weiteren kann die Zuteilung eines Dienstzugangs beschleunigt werden.

Gemäß einer weiteren Ausführungsform ist die Verwaltungseinheit dazu ausgebildet, bei einem Stoppen der Ausführung der Gesamtapplikation oder einem Deinstallieren der Gesamtapplikation den entsprechenden Dienstzugang und/oder die Zugriffsberechtigung zu löschen. Durch Löschen des Dienstzugangs und/oder der Zugriffsberechtigung kann auf einfache Weise ein Zugriff auf den exponierten Dienst durch die Gesamtapplikation verhindert werden, sobald diese nicht mehr aktiv ist.

Soll beispielsweise die Gesamtapplikation auf der Ausführungsumgebung über die Verwaltungseinheit gestoppt und deinstalliert werden, kann zunächst durch die Verwaltungseinheit ermittelt werden, ob einzelnen Instanzen der Gesamtapplikation oder der Gesamtapplikation Dienstzugänge zugewiesen wurden. Ist dies der Fall, kann die Zugriffsberechtigungsermittlungseinheit überprüfen, ob diese Dienstzugänge von ihr eingerichtet wurden und löscht die erteilten Berechtigungen, die in Datenbanken, beispielsweise in einem RBAC-System und/oder einem Service-Account-Management, der Verwaltungseinheit gespeichert sind, sofern diese anwendungs-spezifisch vorgenommen wurden (d.h. nur für diese Applikation erstellt wurden). Wenn Dienstzugänge für mehrere Deployment-Konfigurationen/Gesamtapplikationen geteilt werden, können diese beispielsweise nur gelöscht werden, wenn keine weiteren Referenzen durch andere Deployment-Konfigurationen/Gesamtapplikationen existieren und durch die Zugriffsberechtigungsermittlungseinheit eine entsprechende Fehlerbehandlung durchgeführt wird.

Gemäß einer weiteren Ausführungsform weist die Anfrage zum Starten der Gesamtapplikation die Beschreibungsdatei der Gesamtapplikation auf. Vorteilhafterweise enthält diese Beschreibungsdatei, d.h. Deployment-Konfiguration, alle für das Starten der Gesamtapplikation erforderlichen Daten sowie die für die Erstellung der Zugriffsberechtigung und/oder des Dienstzugangs erforderlichen Informationen. Beispielsweise kann die Anfrage zum Starten der Gesamtapplikation die Referenz auf den exponierten Dienst und eine Zielausführungsumgebung der Gesamtapplikation aufweisen. Diese Informationen können entweder in der Anfrage oder in der Beschreibungsdatei in der Anfrage enthalten sein. Durch die Referenz auf den exponierten Dienst kann die Verwaltungseinheit die Zugriffsberechtigung für den entsprechenden Dienst erteilen. Die Zielausführungsumgebung kann beispielsweise die Anforderungen der gewünschten Ziellaufzeitumgebung angeben.

Gemäß einer weiteren Ausführungsform weist die Anfrage Eigenschaften der Zielausführungsumgebung und/oder gewünschte Zugriffsprivilegien auf. Diese Informationen können ebenfalls direkt in der Anfrage oder in der Beschreibungsdatei enthalten sein. Im Gegensatz zu manchen bisherigen Systemen, in denen der Anwender, d.h. der Ersteller der Gesamtapplikation, sich selbst die Zugriffsberechtigung erteilen konnte, ist hier vorgesehen, dass die Gesamtapplikation angeben kann, welche Zugriffsprivilegien, d.h. Zugriffsrechte, sie wünscht, beispielsweise benötigt. Die tatsächliche Auswahl der zu erteilenden Zugriffsprivilegien erfolgt allerdings durch die Verwaltungseinheit bzw. die Zugriffsberechtigungsermittlungseinheit. Auf diese Weise kann verhindert werden, dass der Gesamtapplikation Zugriffsrechte erteilt werden, die über beispielsweise in den Richtlinien hinterlegte Zugriffsrechte hinausgehen.

Die Eigenschaften der Zielausführungsumgebung, d.h. laufzeitumgebungsspezifische Informationen, können die Kritikalität der gewünschten Ausführungsumgebung beschreiben. Diese können z.B. in Form von wohldefinierten Labels an die Verwaltungseinheit bzw. die Zugriffsberechtigungsermittlungseinheit übergeben werden.

Basierend auf den Anforderungen der gewünschten Ziellaufzeitumgebung, den gewünschten Zugriffsberechtigungen und den weiteren Informationen der Gesamtapplikation kann beispielsweise klassifiziert werden, welche (Prozess-)Privilegien auf der Laufzeitumgebung die einzelnen Applikationen der Gesamtapplikation bzw. die innerhalb der Gesamtapplikation spezifizierten Instanzen anfordern. Auf diese Weise kann die Zugriffsberechtigung sehr konkret auf die entsprechende Gesamtapplikation bzw. deren Anforderungen angepasst werden.

Gemäß einer weiteren Ausführungsform weist die Anfrage, entweder direkt oder in der Beschreibungsdatei, eine Signatur der Gesamtapplikation auf, wobei die Zugriffsberechtigungsermittlungseinheit dazu ausgebildet ist, ein oder mehrere Zugriffsprivilegien für die Gesamtapplikation basierend auf der Signatur zu bestimmen.

Die Signatur kann den Vertrauensstatus der Gesamtapplikation definieren. Basierend auf der Signatur kann entsprechend durch die Zugriffsberechtigungsermittlungseinheit bestimmt werden, welche Zugriffsrechte der Gesamtapplikation zugeteilt werden sollten.

Gemäß einer weiteren Ausführungsform weist die Anfrage eine oder mehrere Schwachstellen der Gesamtapplikation auf, wobei die Zugriffsberechtigungsermittlungseinheit dazu ausgebildet ist, die Zugriffsberechtigung basierend auf den Schwachstellen zu bestimmen.

Diese Schwachstellen können beispielsweise beim Hochladen der Beschreibungsdatei oder der Gesamtapplikation in einen zentralen App-Store detektiert worden sein. Diese detektierten Schwachstellen können dann in die Anfrage integriert werden, beispielsweise als Meta-Informationen der Beschreibungsdatei. Solche Informationen können beispielsweise mit Hilfe der Signatur integritätsgesichert sein und entweder vom App-Store-Betreiber oder einer anderen vertrauenswürdigen Entität zu der Beschreibungsdatei hinzugefügt worden sein. Die Schwachstelle, der sogenannte Vulnerability-Status kann hierbei entweder in Form eines Scores bereitgestellt werden oder als URL, auf die die Zugriffsberechtigungsermittlungseinheit zugreifen kann, um den neuesten Score abzurufen. Durch die Information über diese Schwachstellen können die Zugriffsrechte ebenfalls genauer angepasst werden und nur solche Zugriffsrechte erteilt werden, die, basierend auf den bekannten Schwachstellen, keine Gefährdung des Systems hervorrufen.

Gemäß einer weiteren Ausführungsform ist die Zugriffsberechtigungsermittlungseinheit dazu ausgebildet, die Zugriffsberechtigung basierend auf Zugriffsprivilegien von der zumindest einen Komponente der Gesamtapplikation oder von Instanzen der Gesamtapplikation zu bestimmen.

Somit wird die Zugriffsberechtigung nicht nur basierend auf der Gesamtapplikation, sondern basierend auf den individuellen, durch die einzelnen Applikationen bzw. Komponenten erforderlichen Zugriffsprivilegien erteilt bzw. ermittelt. Daher können die einzelnen gewünschten Zugriffsprivilegien berücksichtigt werden, und gleichzeitig auch die einzelnen, basierend auf den anwendungs- und umgebungsspezifischen Bedingungen bestimmten, Zugriffsprivilegien.

Gemäß einem weiteren Aspekt wird ein Verfahren zum Verwalten von Zugriffsberechtigungen auf exponierte Dienste vorgeschlagen, wobei das Verfahren die folgenden Schritte aufweist: Erhalten einer Anfrage zum Starten einer Gesamtapplikation, die aus zumindest einer Komponente besteht, wobei die Gesamtapplikation eine zum Starten erforderliche Beschreibungsdatei aufweist, die zumindest eine Referenz auf zumindest einen exponierten Dienst umfasst, Anfordern einer Zugriffsberechtigung auf den zumindest einen exponierten Dienst für die Gesamtapplikation durch eine Verwaltungseinheit von einer Zugriffsberechtigungsermittlungseinheit, Erhalten einer anwendungs- und/oder umgebungsspezifischen Zugriffsberechtigung von der Zugriffsberechtigungsermittlungseinheit, und Starten der Gesamtapplikation unter Verwendung der erhaltenen Zugriffsberechtigung.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene System beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Systems zum Verwalten von Zugriffsberechtigungen auf exponierte Dienste;

- Fig. 2: zeigt ein schematisches Blockdiagramm des Systems von Fig. 1 in detaillierterer Ansicht;
- Fig. 3: zeigt ein Nachrichtenflussdiagramm eines Verfahrens zum Verwalten von Zugriffsberechtigungen auf exponierte Dienste in einem System gemäß Fig. 1 oder Fig. 2; und
- Fig. 4: zeigt ein schematisches Ablaufdiagramm des Verfahrens zum Verwalten von Zugriffsberechtigungen auf exponierte Dienste gemäß Fig. 3.

In den Figuren sind gleiche oder funktionsgleiche Elemente mit denselben Bezugszeichen versehen worden, sofern nichts anderes angegeben ist.

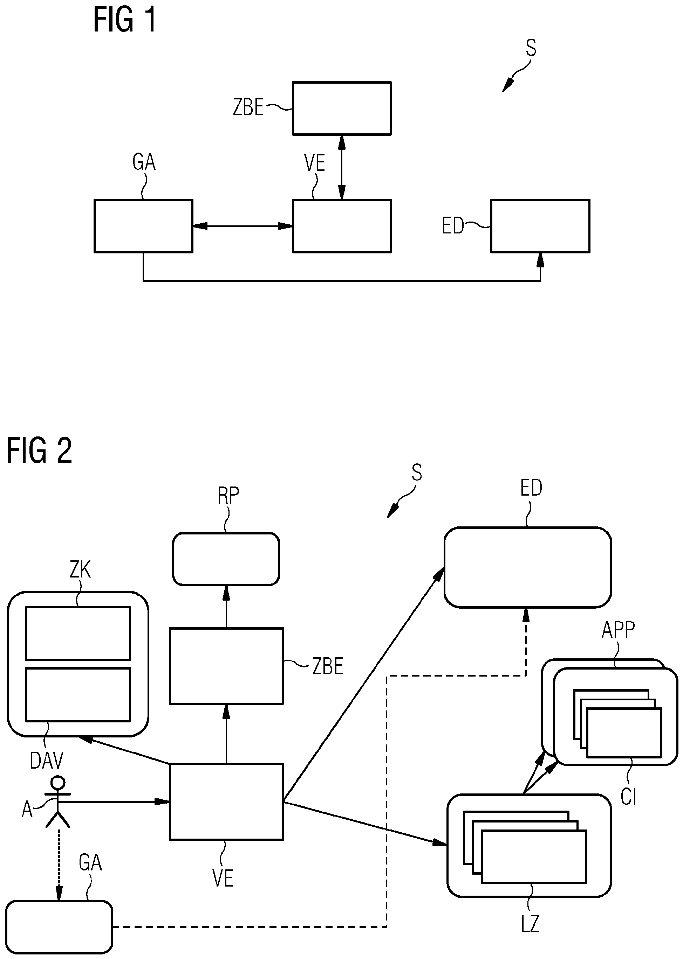

Fig. 1 zeigt ein System S zum Verwalten von Zugriffsberechtigungen auf zumindest einen exponierten Dienst ED. Das System S weist eine Verwaltungseinheit VE zum Verwalten der Zugriffsberechtigungen und eine Zugriffsberechtigungsermittlungseinheit ZBE auf.

Wird von einem Anwender A (in Fig. 2 gezeigt) eine Gesamtapplikation GA erstellt, kann eine Anfrage an die Verwaltungseinheit VE gestellt werden, um eine Zugriffsberechtigung auf den exponierten Dienst ED zu erhalten. Die Gesamtapplikation GA kann aus einer oder mehreren Komponenten (z.B. Applikationen) oder Instanzen bestehen und umfasst eine zum Starten erforderliche Beschreibungsdatei. Die Beschreibungsdatei weist eine Referenz auf den exponierten Dienst ED auf, für den eine Zugriffsberechtigung angefordert wird.

Sobald die Verwaltungseinheit VE die Anfrage erhält, kann die Verwaltungseinheit VE von der Zugriffsberechtigungsermittlungseinheit ZBE eine entsprechende Zugriffsberechtigung für die Gesamtapplikation GA anfordern. Die Zugriffsberechtigung wird dabei sowohl anwendungs- als auch umgebungsspezifisch erstellt und der Gesamtapplikation GA übergeben. Diese kann dann wiederum durch die Verwaltungseinheit VE gestartet werden und über die erteilte Zugriffsberechtigung auf den exponierten Dienst zugreifen.

Wie in Fig. 2 gezeigt ist, kann die Verwaltungseinheit VE zusätzlich zu der Gesamtapplikation GA verschiedene Applikationen APP mit jeweiligen Container-Instanzen verwalten. Diesen Applikationen APP können ebenfalls Zugriffsberechtigungen auf den exponierten Dienst ED zugeteilt sein. Jede dieser Applikationen kann auf verschiedenen Laufzeitumgebungen LZ laufen, wenn sie von der Verwaltungseinheit VE gestartet wurde. Nach dem Starten der Gesamtapplikation GA kann auch diese auf einer der Laufzeitumgebungen LZ laufen. Die Information über die zu verwendende Laufzeitumgebung LZ kann in der Anfrage zum Starten der Gesamtapplikation GA oder der Beschreibungsdatei enthalten sein.

Zum Erstellen der Zugriffsberechtigung kann die Zugriffsberechtigungsermittlungseinheit ZBE auf ein Richtlinienpaket RP zugreifen. In diesem können Richtlinien für den exponierten Dienst ED bzw. für die Gesamtapplikation GA hinterlegt sein. Diese Richtlinien definieren, unter welchen Bedingungen (d.h. Eigenschaften der Gesamtapplikation GA wie Schwachstellen, Instanzen, gewünschten Zugriffsrechten etc.) einer Applikation welche Zugriffsrechte zuzuteilen sind. Wenn der Gesamtapplikation GA eine Zugriffsberechtigung, die aus mehreren Zugriffsrechten bestehen kann, zugeteilt ist, kann die Verwaltungseinheit VE einen Dienstzugang erstellen, beispielsweise über eine Dienstzugangsverwaltungseinheit DAV, und in einer Zugriffskontrolleinheit ZK speichern. Über diesen Dienstzugang kann die Gesamtapplikation GA dann auf den exponierten Dienst ED zugreifen. Der Dienstzugang kann dabei entweder der Gesamtapplikation GA zugeteilt werden oder aber den einzelnen Applikationen, Komponenten oder Container-Instanzen in der Gesamtapplikation GA.

Innerhalb der Beschreibungsdatei kann der jeweilige Anwender oder Ersteller A (z.B. ein App-Developer) den exponierten Dienst ED entweder direkt (durch Angabe des Service-Namens - z.B. API-Server) oder indirekt durch Angabe einer Referenz (z.B. einem bestimmten Label) referenzieren. Durch die Angabe eines geteilten Labels können später durch die Verwaltungseinheit VE auch mehrere verwaltete Dienste zusammengefasst werden. Weiterhin besteht die Möglichkeit, dass der Anwender A in der Beschreibungsdatei die aus seiner Sicht minimal erforderlichen Privilegien für den exponierten Dienst ED beschreiben kann. Werden diese nicht beschrieben, kann die Gesamtapplikation GA die von der Zugriffsberechtigungsermittlungseinheit ZBE ermittelten Berechtigungen akzeptiert werden.

Für die Zuweisung des oben beschriebenen Dienstzugangs besteht die Möglichkeit, dass der Anwender A diesen innerhalb der Beschreibungsdatei bzw. der Gesamtapplikation GA definiert oder aber die Zugriffsberechtigungsermittlungseinheit ZBE diesen eigenständig nach Ermittlung der Privilegien ermittelt. Der Nachteil bei dem ersten Verfahren ist eine mögliche Namenskollision mit anderen Container-Instanzen aus anderen Apps und auch mögliche Konflikte für ermittelte Privilegien. Vorteilhaft ist jedoch, dass hierbei mehrere Container-Instanzen unterschiedlicher Applikationen gezielt die gleichen Dienstzugangs-Namen verwenden können. Bei der automatischen Bereitstellung des Dienstzugangs, auch Service-Account genannt, durch die Zugriffsberechtigungsermittlungseinheit ZBE ist jedoch vorteilhaft, wenn keine Namenskollisionen erzeugt werden, sondern stattdessen auf eindeutige Art und Weise ermittelt und für jede Instanz erzeugt werden.

Sofern die Referenz auf den exponierten Dienst ED innerhalb der Beschreibungsdatei bzw. der Gesamtapplikation global definiert wird und hierin die jeweiligen Container-Instanzen, d.h. die Komponenten der Gesamtapplikation GA, verknüpft werden, kann ein Dienstzugang auch innerhalb einer Anwendung eindeutig sein und über mehrere Instanzen innerhalb der Anwendung geteilt werden.

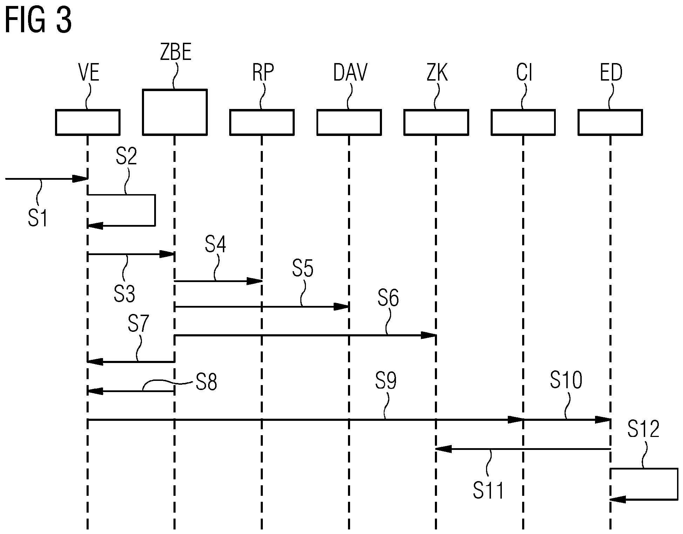

Fig. 3 zeigt ein Beispiel eines Verfahrens zum Verwalten von Zugriffsberechtigungen, wie es durch das System S der Figuren 1 und 2 ausgeführt werden kann.

In Schritt S1 erhält die Verwaltungseinheit VE zunächst die Anfrage zum Erstellen einer Zugriffsberechtigung. Insbesondere enthält die Anfrage die Beschreibungsdatei der Gesamtapplikation GA.

Nachdem die Anfrage an die Verwaltungseinheit VE zur Installation übergeben wurde, erkennt die Verwaltungseinheit VE, ob und welche Referenzen auf den exponierten Dienst ED enthalten sind (S2), und übergibt diese in Schritt S3 mitsamt der ermittelten Zielausführungsumgebung (z.B. durch Bereitstellung des Kubernetes-Namespaces, des vom Betreiber ausgewählten Industrial Edge Devices) an die Zugriffsberechtigungsermittlungseinheit ZBE. Hierbei können noch laufzeitumgebungsspezifische Informationen mitgeliefert werden, welche die Kritikalität der gewünschten Ausführungsumgebung beschreiben. Diese können z.B. in Form von wohldefinierten Labels an die Zugriffsberechtigungsermittlungseinheit ZBE übergeben werden.

Nachdem sämtliche Informationen übergeben wurden, validiert die Zugriffsberechtigungsermittlungseinheit diese ZBE in Schritt S4 gegenüber einem zentral bereitgestelltem Richtlinienpaket RP, welches beispielsweise als OpenPolicyAgent-Policy-Paket implementiert ist.

Durch Übergabe der Anforderungen der gewünschten Ziellaufzeitumgebung, der gewünschten Zugriffsberechtigungen und der gesamten Beschreibungsdatei bzw. der Gesamtapplikation GA kann hierbei in Schritt S4 klassifiziert werden, welche (Prozess-)Privilegien auf der Laufzeitumgebung die einzelnen Applikationen bzw. die innerhalb der Gesamtapplikation GA spezifizierten Instanzen anfordern. Weiterhin kann innerhalb der Metadaten der Beschreibungsdatei bzw. der Gesamtapplikation GA eine Signatur vorhanden sein, deren Vertrauensstatus innerhalb des Richtlinien-Paketes RP definiert ist.

Das Validierungsergebnis kann hierbei ein bzw. mehrere wohldefinierte, dem Ersteller des Richtlinienpaketes RP und innerhalb der Verwaltungseinheit VE bekannten Berechtigungsprofile sein oder alternativ direkt für den referenzierten exponierten Dienst ED abgeleitete Zugriffsberechtigungen darstellen, aus welchen für den jeweiligen Dienstzugang direkt ein Berechtigungsprofil erstellt werden kann. Beispielsweise können innerhalb des Richtlinienpaketes RP mehrere Validierungsfunktionen ausgeführt werden und diese können auch widersprüchliche Ergebnisse liefern (z.B. widersprüchliche Berechtigungszuweisungen für das Privileg "Container läuft im Prozessnamespace des Hosts" oder das Privileg "Container läuft im Netzwerknamespace des Hosts"), da die unterschiedlichen für die Applikation bzw. einzelnen Instanzen angeforderten Privilegien auch in Kombination auftreten können.

Es wird hier zwar angenommen, dass einzelne wohldefinierte Zugriffsprofile sich nicht widersprechen, allerdings innerhalb des Richtlinienpaketes RP sehr wohl ein Ergebnis erzeugt werden kann, welches in einer Validierungsfunktion ein Zugriffsprofil erlaubt, dieses aber in einer anderen Validierungsfunktion negiert wird. Tritt dieser Fall auf, muss innerhalb des Richtlinienpaketes RP definiert werden, ob der Installationsvorgang der Gesamtapplikation GA mit einem Fehler abbricht oder die Negierung eines Profils oder alternativ dessen Zuweisung vorrangig zu behandeln ist.

Wurden die zuzuweisenden Zugriffsberechtigungen für die Gesamtapplikation GA von der Zugriffsberechtigungsermittlungseinheit ZBE ermittelt, wird im nächsten Schritt S5 der Dienstzugang bei der Dienstzugangsverwaltungseinheit DAV eingerichtet. Anschließend wird der Dienstzugang auf die ermittelten Zugriffsprivilegien bzw. Zugriffsberechtigungen für den exponierten Dienst ED abgebildet und in der Zugriffskontrolleinheit ZK, beispielsweise einem RBAC-System, in Schritt S6 abgelegt.

In Schritt S7 meldet die Zugriffsberechtigungsermittlungseinheit ZBE schließlich an die Verwaltungseinheit VE die erfolgreiche Einrichtung des Dienstzugangs und anschließend in Schritt S8 die Zuordnung des Dienstzugangs und fordert den Start der Gesamtapplikation GA durch die Verwaltungseinheit VE an.

Im nächsten Schritt S9 wird dann durch einen entsprechenden API-Aufruf durch die Verwaltungseinheit VE die Gesamtapplikation GA gestartet, wobei eine Container-Instanz CI der Gesamtapplikation GA mit dem ermittelten Dienstzugang gestartet wird. Die Container-Instanz CI kann daraufhin auf den exponierten Dienst ED mittels des Dienstzugangs ED zugreifen (Schritt S10) bzw. sich mit dem Dienstzugang bei dem exponierten Dienst ED authentisieren. Der exponierte Dienst ED wiederum kann durch eine Abfrage bei der Zugriffskontrolleinheit ZK in Schritt S11 die Berechtigung der Container-Instanz bzw. des Dienstzugangs verifizieren. Ist diese Verifizierung erfolgreich, kann der exponierte Dienst ED in Schritt S12 den Zugriff durch die Container-Instanz CI autorisieren.

Das Starten der Container-Instanz Cl mit Hilfe des Dienstzugangs und die folgende Autorisierung kann für jede Container-Instanz oder Applikation der Gesamtapplikation durchgeführt werden. Es ist auch möglich, dass jeder Container-Instanz CI ein eigener Dienstzugang zugeteilt wird oder dass einige Container-Instanzen CI den gleichen Dienstzugang verwenden und andere Container-Instanzen CI einen oder mehrere andere Dienstzugänge.

Soll die Gesamtapplikation GA oder deren Container-Instanz Cl auf der Ausführungsumgebung über die Verwaltungseinheit VE gestoppt und/oder deinstalliert werden, wird ermittelt, ob einzelnen Container-Instanzen CI Dienstzugänge zugewiesen wurden. Ist dies der Fall, überprüft die Zugriffsberechtigungsermittlungseinheit ZBE, ob diese Dienstzugänge von ihr eingerichtet wurden und löscht die erteilten Berechtigungen im RBAC-System ZK und in der Dienstzugangsverwaltungseinheit DAV (Service-Account-Management) der Verwaltungseinheit VE, sofern diese app-spezifisch, d.h. für diese Gesamtapplikation oder Container-Instanz, vorgenommen wurden. Für über mehrere Beschreibungsdateien/Gesamtapplikationen geteilte Dienstzugänge werden diese nur gelöscht, wenn keine weiteren Referenzen durch andere Beschreibungsdateien/Gesamtapplikationen existieren und durch die Zugriffsberechtigungsermittlungseinheit ZBE eine entsprechende Fehlerbehandlung durchgeführt wird.

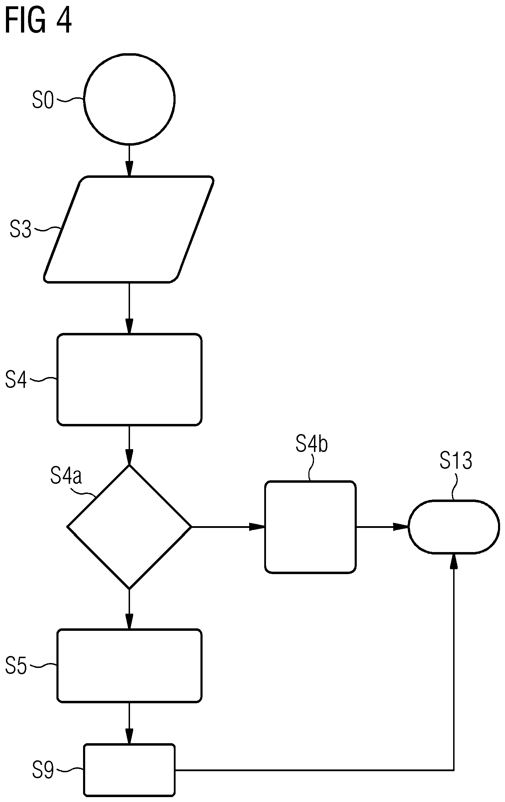

Fig. 4 zeigt den Ablauf des Startens der Gesamtapplikation bzw. Erzeugung des Dienstzugangs in der Zugriffsberechtigungsermittlungseinheit ZBE. In Schritt S0 wird zunächst der Vorgang gestartet.

Wenn in Schritt S3 und S4 die Gesamtapplikation bzw. die Beschreibungsdatei und sämtliche relevanten Informationen (wie exponierter Dienst ED, gewünschte Privilegien etc.) an die Zugriffsberechtigungsermittlungseinheit ZBE übergeben wurden und diese die Privilegien bzw. Zugriffsrechte basierend auf den vorhandenen Richtlinien ermittelt hat, wird in Schritt S4a überprüft, ob es einen Konflikt bei den ermittelten Privilegien gibt, wie oben bereits beschrieben wurde. Wenn kein Konflikt vorliegt, fährt die Zugriffsberechtigungsermittlungseinheit ZBE mit den oben beschriebenen Schritten S5 und S9 fort. Andernfalls wird eine Fehlermeldung in Schritt S4b ausgegeben, wie ebenfalls oben beschrieben ist. Das Verfahren endet dann in Schritt S13 bzw. beginnt wieder bei Schritt S0.

Wird ein neues Richtlinienpaket RP bereitgestellt, kann dieses ausschließlich für neu zu installierende containerisierte Applikationen GA angewandt werden, direkt bei der Aktualisierung validiert werden und zu einer Aktualisierung der Dienstzugangsberechtigungen führen oder aber eine Validierung durchführen und dem Betreiber eine Fehlermeldung bzgl. Nicht-Konformität der darauf betrieben Applikationen GA, APP ausgeben, welche der Betreiber der Plattform innerhalb einer bestimmten Zeit zu berücksichtigen hat.

Für die letzten beiden Varianten müssen hierfür die für die Validierung erforderlichen Validierungsinformationen unabhängig vom Einspielvorgang einer Applikation der Verwaltungseinheit VE bzw. der Zugriffsberechtigungsermittlungseinheit ZBE vorliegen, sodass diese die Validierung beim Einspielen eines neuen Richtlinienpaketes RP durchführen kann. Das Richtlinienpaket RP kann prinzipiell vom Hersteller der Plattform zentral bereitgestellt werden oder auch kundenspezifisch erzeugt werden.

Wie bereits beschrieben, können Berechtigungen für den exponierten Dienst ED applikationsspezifisch für jede Container-Instanz CI der Gesamtapplikation GA mit Hilfe eines umgebungsspezifischen Richtlinienpaketes RP abgeleitet und eingerichtet werden. Werden in der Bewertung widersprüchliche abgeleitete Privilegien ermittelt, erfolgt entweder ein Abbruch (siehe z.B. Schritt S4b in Fig. 4) oder gemäß des Richtlinienpaketes RP wird ermittelt, ob die restriktivste oder die am wenigsten ermittelte Einstellung ermittelt wird.

Einzelne Knoten bzw. Ausführungsumgebungen innerhalb eines zentral gemanagten Dienstes können unterschiedlich klassifiziert werden, sodass innerhalb des gleichen Clusters Container-Instanzen CI knotenspezifisch unterschiedlich berechtigt werden können.

Innerhalb der Beschreibungsdatei oder den Metadaten der Gesamtapplikation GA kann für jede Instanz CI vom Entwickler der minimal nötige Zugriff für den exponierten Dienst ED eingestellt werden. Sofern dieser minimal nötige Zugriff nicht von der Verwaltungseinheit VE eingerichtet werden kann, kann eine entsprechende Fehlermeldung während des Deployments ausgegeben werden.

Die von einer Container-Instanz CI referenzierten exponierten Dienste ED können entweder direkt referenziert werden oder in einzelne Klassen unterteilt werden. Ist letzteres der Fall, erfolgt die Zuordnung der Klassen zu den tatsächlich benötigten Diensten durch die Verwaltungseinheit VE.

Der Dienstzugang für eine Container-Instanz CI kann entweder vom Entwickler der Gesamtapplikation GA vorgegeben werden oder dynamisch während des Installationsprozesses durch die Verwaltungseinheit VE erzeugt und eindeutig zugewiesen werden.

Obwohl die vorliegende Erfindung anhand von Ausführungsbeispielen beschrieben wurde, ist sie vielfältig modifizierbar.

### Bezugszeichenliste

- A: Anwender
- APP: Applikation
- CI: Container-Instanz
- DAV: Dienstzugangsverwaltungseinheit
- ED: Exponierter Dienst
- GA: Gesamtapplikation
- LZ: Laufzeitumgebung
- RP: Richtlinienpaket
- S: System
- VE: Verwaltungseinheit
- ZBE: Zugriffsberechtigungsverwaltungseinheit
- ZK: Zugriffskontrolleinheit
- S0-S13: Verfahrensschritte

## Patentansprüche

1. System (S) zum Verwalten von Zugriffsberechtigungen auf exponierte Dienste (ED),
mit einer Verwaltungseinheit (VE) zum Verwalten von Zugriffsberechtigungen,
mit zumindest einem exponierten Dienst (ED), und
mit einer Zugriffsberechtigungsermittlungseinheit (ZBE),
wobei die Verwaltungseinheit (VE) dazu ausgebildet ist, eine Anfrage zum Starten einer Gesamtapplikation (GA), die aus zumindest einer Komponente (CI) besteht, zu erhalten, wobei die Gesamtapplikation (GA) eine zum Starten erforderliche Beschreibungsdatei aufweist, die zumindest eine Referenz auf den zumindest einen exponierten Dienst (ED) umfasst, und wobei die Verwaltungseinheit (VE) des Weiteren dazu ausgebildet ist, von der Zugriffsberechtigungsermittlungseinheit (ZBE) eine Zugriffsberechtigung auf den zumindest einen exponierten Dienst (ED) für die Gesamtapplikation (GA) anzufordern, von der Zugriffsberechtigungsermittlungseinheit (ZBE) eine anwendungs- und/oder umgebungsspezifische Zugriffsberechtigung zu erhalten, und die Gesamtapplikation (GA) unter Verwendung der erhaltenen Zugriffsberechtigung zu starten.

2. System nach Anspruch 1, **dadurch gekennzeichnet, dass** die Zugriffsberechtigungsermittlungseinheit (ZBE) dazu ausgebildet ist, aus einer Datenbank (RP) Zugriffsberechtigungen abzurufen, die für den zumindest einen exponierten Dienst (ED) vordefinierten Richtlinien entsprechen, die in der Datenbank (RP) gespeichert sind.

3. System nach Anspruch 2, **dadurch gekennzeichnet, dass** die Zugriffsberechtigungsermittlungseinheit (ZBE) dazu ausgebildet ist, bei einer Aktualisierung der vordefinierten Richtlinien die Zugriffsberechtigung für die Gesamtapplikation (GA) zu aktualisieren.

4. System nach einem der vorhergehenden Ansprüche, **dadurch gekennzeichnet, dass** die Zugriffsberechtigung ein oder mehrere Zugriffsprivilegien aufweist.

5. System nach einem der vorhergehenden Ansprüche, **dadurch gekennzeichnet, dass** die Verwaltungseinheit (VE) dazu ausgebildet ist, basierend auf der erhaltenen Zugriffsberechtigung einen Dienstzugang auf den zumindest einen exponierten Dienst (ED) für die Gesamtapplikation (GA) zu erstellen und der Gesamtapplikation (GA) den Dienstzugang zuzuordnen.

6. System nach Anspruch 5, **dadurch gekennzeichnet, dass** die Verwaltungseinheit (VE) dazu ausgebildet ist, den erstellten Dienstzugang weiteren Gesamtapplikationen (GA) mit derselben Zugriffsberechtigung zuzuordnen.

7. System nach einem Ansprüche 5 oder 6, **dadurch gekennzeichnet, dass** die Verwaltungseinheit (VE) dazu ausgebildet ist, bei einem Stoppen der Ausführung der Gesamtapplikation (GA) oder einem Deinstallieren der Gesamtapplikation (GA) den entsprechenden Dienstzugang und/oder die Zugriffsberechtigung zu löschen.

8. System nach einem der vorhergehenden Ansprüche, **dadurch gekennzeichnet, dass** die Anfrage zum Starten der Gesamtapplikation (GA) die Beschreibungsdatei der Gesamtapplikation (GA) aufweist.

9. System nach einem der vorhergehenden Ansprüche, **dadurch gekennzeichnet, dass** die Anfrage zum Starten der Gesamtapplikation (GA) die Referenz auf den exponierten Dienst (ED) und eine Zielausführungsumgebung der Gesamtapplikation (GA) aufweist.

10. System nach einem der vorhergehenden Ansprüche, **dadurch gekennzeichnet, dass** die Anfrage Eigenschaften der Zielausführungsumgebung (LZ) und/oder gewünschte Zugriffsprivilegien aufweist.

11. System nach einem der vorhergehenden Ansprüche, **dadurch gekennzeichnet, dass** die Anfrage eine Signatur der Gesamtapplikation (GA) aufweist, wobei die Zugriffsberechtigungsermittlungseinheit (ZBE) dazu ausgebildet ist, ein oder mehrere Zugriffsprivilegien für die Gesamtapplikation (GA) basierend auf der Signatur zu bestimmen.

12. System nach einem der vorhergehenden Ansprüche, **dadurch gekennzeichnet, dass** die Anfrage eine oder mehrere Schwachstellen der Gesamtapplikation (GA) aufweist, wobei die Zugriffsberechtigungsermittlungseinheit (ZBE) dazu ausgebildet ist, die Zugriffsberechtigung basierend auf den Schwachstellen zu bestimmen.

13. System nach einem der vorhergehenden Ansprüche, **dadurch gekennzeichnet, dass** die Zugriffsberechtigungsermittlungseinheit (ZBE) dazu ausgebildet ist, die Zugriffsberechtigung basierend auf Zugriffsprivilegien von der zumindest einen Komponente (CI) der Gesamtapplikation (GA) oder von Instanzen (CI) der Gesamtapplikation (GA) zu bestimmen.

14. Verfahren zum Verwalten von Zugriffsberechtigungen auf exponierte Dienste (ED), wobei das Verfahren die folgenden Schritte aufweist:
Erhalten (S1) einer Anfrage zum Starten einer Gesamtapplikation (GA), die aus zumindest einer Komponente (CI) besteht, wobei die Gesamtapplikation (GA) eine zum Starten erforderliche Beschreibungsdatei aufweist, die zumindest eine Referenz auf zumindest einen exponierten Dienst (ED) umfasst,
Anfordern (S3) einer Zugriffsberechtigung auf den zumindest einen exponierten Dienst (ED) für die Gesamtapplikation (GA) durch eine Verwaltungseinheit (VE) von einer Zugriffsberechtigungsermittlungseinheit (ZBE),
Erhalten (S7) einer anwendungs- und/oder umgebungsspezifischen Zugriffsberechtigung von der Zugriffsberechtigungsermittlungseinheit (ZBE), und
Starten (S9) der Gesamtapplikation (GA) unter Verwendung der erhaltenen Zugriffsberechtigung.

15. Computerprogrammprodukt, welches auf einer programmgesteuerten Einrichtung die Durchführung des Verfahrens nach Anspruch 14 veranlasst.
